# FASCICULE DE BREVET EUROPEEN

(11) **EP 3 065 131 B1**
(45) Date de publication et mention de la délivrance du brevet: **20.05.2020**
(21) Numéro de dépôt: 15157919.0
(22) Date de dépôt: 06.03.2015
(51) Int. Cl.: G10L 15/22

(54) **Méthode et système de post-traitement d'un résultat de reconnaissance vocale**
Methode und System zur Nachbearbeitung des Ergebnisses einer Spracherkennung
Method and system for post-processing a speech recognition result

(43) Date de publication de la demande: 07.09.2016
(73) Titulaire: ZETES Industries S.A., 1130 Bruxelles (BE)
(72) Inventeur: Forster, Jean-Luc, 1380 LASNE (BE)
(74) Mandataire: ABYOO

(56) Documents cités:
- US-A1- 2002 133 346
- US-A1- 2005 209 849
- US-A1- 2007 050 190
- US-A1- 2014 249 817
- US-B1- 7 181 399

## Description

### Domaine de l'invention

Selon un premier aspect, l'invention se rapporte à une méthode de post-traitement d'un résultat de reconnaissance vocale. Selon un deuxième aspect, l'invention se rapporte à un système (ou dispositif) de post-traitement d'un résultat de reconnaissance vocale. Selon un troisième aspect, l'invention se rapporte à un programme. Selon un quatrième aspect, l'invention se rapporte à un support de stockage comprenant des instructions (par exemple : clé usb, disque de type CD-ROM ou DVD).

### État de la technique

Un moteur de reconnaissance vocale permet de générer, à partir d'un message parlé ou audio, un résultat qui est généralement sous forme d'un texte ou d'un code exploitable par une machine. Cette technologie est maintenant largement répandue et est jugée très utile. Différentes applications de la reconnaissance vocale sont notamment enseignées dans US6,754,629B1.

Il existe des études pour améliorer les résultats fournis par un moteur de reconnaissance vocale. Par exemple, US2014/0278418A1 propose de tirer profit de l'identité d'un orateur pour adapter en conséquence les algorithmes de reconnaissance vocale d'un moteur de reconnaissance vocale. Cette adaptation des algorithmes se fait donc au sein même du moteur de reconnaissance vocale, par exemple en modifiant son dictionnaire phonétique pour tenir compte de la façon dont parle l'orateur ou utilisateur.

Un résultat de reconnaissance vocale comprend généralement une suite d'éléments, par exemple des mots, séparés par des silences. Le résultat est caractérisé par un début et une fin et ses éléments sont temporellement arrangés entre ce début et cette fin.

Un résultat fourni par un moteur de reconnaissance vocale peut être utilisé par exemple pour entrer une information dans un système informatique, par exemple un numéro d'article ou une instruction quelconque à réaliser. Plutôt que d'utiliser un résultat de reconnaissance vocale brut, ce résultat subit parfois une ou plusieurs opérations de post-traitement pour en extraire une solution post-traitée. Par exemple, il est possible de parcourir un résultat de reconnaissance vocale du début vers la fin et de retenir, par exemple, les cinq premiers éléments considérés comme valides, s'il est connu que l'information utile ne comprend pas plus de cinq éléments (un élément est par exemple un mot). En effet, sachant que l'information utile (un code par exemple) ne comprend pas plus de cinq mots (cinq chiffres par exemple), on décide alors parfois de ne retenir que les cinq premiers éléments valides d'un résultat de reconnaissance vocale. Tout élément postérieur additionnel est considéré comme superflu par rapport à l'information attendue et est donc considéré comme non valide. Le document US7181399 procède d'un manière similaire.Une telle méthode de post-traitement ne fournit pas toujours des solutions acceptables. Ainsi, les inventeurs ont trouvé qu'une telle méthode peut conduire à générer une solution post-traitée fausse dans certains cas, c'est-à-dire une solution qui ne correspond pas à l'information qui doit être réellement fournie par l'orateur. Cette méthode de post-traitement n'est donc pas assez fiable.

Le document US 2007/050190 décrit une méthode de traitement d'un signal vocal selon laquelle ledit signal vocal est tout d'abord décomposé en sections vocales en fonction des temps morts entre deux trames vocales (par exemple deux mots) prononcées par l'orateur. Un mécanisme de priorité sélectionne ensuite un sous-ensemble restreint de ces sections vocales en fonction de critères prédéfinis. Seules les sections vocales de ce sous-ensemble restreint sont ensuite envoyées à un moteur de reconnaissance vocale. Contrairement à la méthode selon l'invention, il s'agit ici d'une méthode de pré-traitement d'un signal vocal, c'est-à-dire d'une méthode intervenant avant que des données vocales ne soient envoyées à un moteur de reconnaissance vocale pour fournir ensuite un résultat de reconnaissance vocale. Cette méthode de pré-traitement ne fournit par ailleurs pas toujours des solutions acceptables car les temps morts entre deux trames vocales peuvent varier d'un orateur à l'autre et/ou d'une expression à l'autre d'un même orateur.

### Résumé de l'invention

Selon un premier aspect, un des buts de l'invention est de fournir une méthode de post-traitement d'un résultat de reconnaissance vocale qui soit plus fiable. A cette fin, les inventeurs proposent la méthode suivante. Méthode de post-traitement d'un résultat de reconnaissance vocale, ledit résultat comprenant un début, une fin et une pluralité d'éléments répartis entre ledit début et ladite fin, ladite méthode de post-traitement comprenant les étapes suivantes :
i. recevoir ledit résultat ;
ii. isoler un élément de ladite pluralité d'éléments qui n'a pas subi le test de validation de l'étape iii.a. ;
iii. ensuite,
   a. si un élément a été isolé à l'étape ii., déterminer s'il est valide en utilisant un test de validation,
   b. sinon, passer directement à l'étape v. ;
iv. répéter les étapes ii. et iii. (dans l'ordre suivant : étape ii. puis étape iii.);
v. si au moins un élément a été déterminé valide à l'étape iii.a, déterminer une solution post-traitée en utilisant au moins un élément déterminé valide à l'étape iii.a ;
caractérisée en ce que chaque élément isolé à l'étape ii. est choisi de ladite fin du résultat audit début du résultat de manière consécutive et en ce que l'étape iii.a. comprend en outre une instruction de passer directement à l'étape v. si l'élément (113) subissant le test de validation de l'étape iii.a n'est pas déterminé comme valide.

Avec la méthode de l'invention, un résultat de reconnaissance vocale est parcouru de la fin vers le début. Les inventeurs ont en effet découvert qu'une personne dictant un message à un moteur de reconnaissance vocale avait plus tendance à hésiter et/ou à se tromper au début qu'à la fin. En traitant un résultat de reconnaissance vocale par la fin plutôt que par le début, la méthode de l'invention privilégie la partie du résultat qui a le plus de chances d'avoir la bonne information. Au final, cette méthode est donc plus fiable. De plus, une solution post-traitée pour laquelle au moins un élément a été déterminé valide à l'étape iii.a ne comprend que des éléments valides consécutifs du résultat du moteur de reconnaissance vocale. La fiabilité de la méthode est alors encore améliorée car on ne garde qu'une série d'éléments valides consécutifs.

Prenons l'exemple suivant. Imaginons qu'un code à lire est : 4531. L'opérateur, en le lisant, dit : « 5, 4, euh, 4, 5, 3, 1 ». Généralement, un moteur de reconnaissance vocale fournira comme résultat, soit « 5, 4, 2, 4, 5, 3, 1 », soit « 5, 4, 4, 5, 3, 1 ». Dans le premier cas, « euh » est associé à deux, dans le deuxième cas, le moteur ne fournit pas de résultat pour « euh ». Faisons l'hypothèse qu'un système de post-traitement (qui peut être intégré dans un moteur de reconnaissance vocale) sache que le résultat ne doit pas avoir plus de quatre bons éléments (chiffres dans ce cas-ci). Un système de post-traitement qui parcourt le résultat du début vers la fin du résultat fournira comme solution post-traitée : 5424 ou 5445 (et non 4531). La méthode de l'invention fournira 4531, c'est-à-dire la bonne solution.

Les inventeurs ont remarqué que la situation illustrée par cet exemple, c'est-à-dire le fait qu'un opérateur a plus tendance à hésiter ou se tromper en début qu'en fin de séquence enregistrée, est plus fréquente que l'inverse. Ainsi, globalement, la méthode de l'invention est plus fiable car elle fournit moins de mauvais résultats. Les chances d'obtenir une solution post-traitée correcte sont aussi plus élevées avec la méthode de l'invention. Elle est donc aussi plus efficace.

La méthode de l'invention a d'autres avantages. Elle est facile à mettre en œuvre. En particulier, elle ne demande pas beaucoup d'étapes d'implémentation. Les étapes d'implémentation sont en outre simples. Ces aspects facilitent l'intégration de la méthode de l'invention, par exemple au niveau d'un système informatique utilisant un résultat de reconnaissance vocale, ou au niveau d'un moteur de reconnaissance vocale par exemple.

La méthode de post-traitement selon l'invention peut être vue comme une méthode de filtrage d'un résultat de reconnaissance vocale : en effet, les éléments non valides ne sont pas utilisés pour déterminer la solution post-traitée.

Un résultat de reconnaissance vocale est généralement sous forme d'un texte ou d'un code exploitable par une machine. Un élément d'un résultat représente une information du résultat délimitée par deux temps différents le long d'une échelle de temps, t, associée au résultat, et qui n'est pas considérée comme un silence ou un bruit de fond. Généralement, un élément est un groupe de phonèmes. Un phonème est connu de l'homme du métier. De préférence, un élément est un mot. Un élément peut aussi être un groupe ou une combinaison de mots. Un exemple de combinaison de mots est 'annuler opération'.

Dans le contexte de l'invention, un résultat de reconnaissance vocale peut être de différents types. Selon un premier exemple possible, un résultat de reconnaissance vocale représente une hypothèse fournie par un moteur de reconnaissance vocale à partir d'un message dit par un utilisateur ou orateur. En général, un moteur de reconnaissance vocale fournit plusieurs (par exemple trois) hypothèses à partir d'un message dit par un utilisateur. Dans ce cas, il fournit aussi en général un score (qui peut être exprimé dans différentes unités en fonction du type de moteur de reconnaissance vocale) pour chaque hypothèse. De préférence, la méthode de post-traitement de l'invention comprend alors une étape préliminaire de ne sélectionner que la ou les hypothèse(s) ayant un score supérieur ou égal à un score prédéterminé. Par exemple, si le moteur de reconnaissance vocale utilisé est le modèle VoCon® 3200 V3.14 de Nuance, ledit score prédéterminé est égal à 4000. Les étapes décrites ci-dessus (étapes i, ii, iii, iv, v) ne sont alors appliquées qu'aux résultats ayant un score supérieur ou égale audit score prédéterminé.

Selon un autre exemple possible, un résultat de reconnaissance vocale est une solution, comprenant généralement une pluralité d'éléments, obtenue à partir d'une ou plusieurs opérations de post-traitement appliquée(s) à une ou plusieurs hypothèse(s) fournie(s) par un moteur de reconnaissance vocale. Dans ce dernier exemple, le résultat de reconnaissance vocale est donc issu d'un module de reconnaissance vocale et issu d'un ou plusieurs module(s) de post-traitement d'une ou plusieurs hypothèse(s) fournie(s) par un moteur de reconnaissance vocale.

Si aucun élément n'a été déterminé valide à l'étape iii.a, l'étape v comprend de préférence une sous-étape de fournir une autre solution post-traitée. De préférence, cette autre solution post-traitée correspond à une solution post-traitée qui ne comprend pas d'élément dudit résultat. Dans cette variante préférée et quand aucun élément n'a été déterminé valide à l'étape iii.a, différents exemples de solution post-traitée sont : message vide c'est-à-dire ne comprenant aucun élément (aucun mot par exemple), message mentionnant que le post-traitement a été infructueux. Selon une autre variante possible, cette autre solution post-traitée correspond au résultat de reconnaissance vocale si aucun élément n'a été déterminé valide à l'étape iii.a (pas de filtrage du résultat).

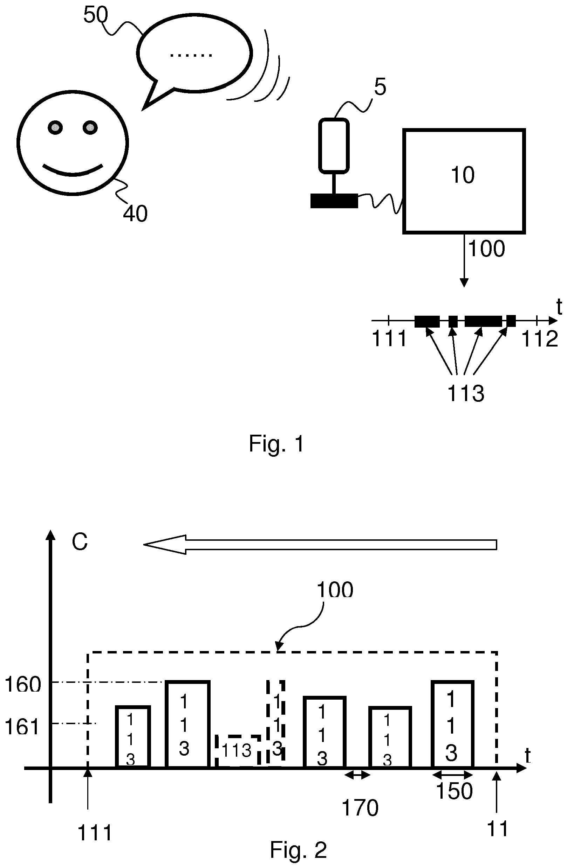

Le long d'une échelle de temps t associée au résultat (voir figures 1 et 2 par exemple), le début du résultat est antérieur à la fin du résultat.

De préférence, un élément est un mot. Des exemples de mot sont : un, deux, voiture, parapluie. Selon cette variante préférée, la méthode de l'invention donne encore de meilleurs résultats. Chaque mot est déterminé à partir d'un message dit par un utilisateur par un moteur de reconnaissance vocale utilisant un dictionnaire. Des règles de grammaire permettent éventuellement de réduire le choix de mots possibles parmi un dictionnaire.

De préférence, la méthode de l'invention comprend en outre l'étape suivante : vi. déterminer si ladite solution post-traitée de l'étape v. satisfait une règle de grammaire. En utilisant une règle de grammaire, on peut encore augmenter la fiabilité de la méthode de l'invention. On peut notamment mieux filtrer un résultat aberrant. Un exemple de règle de grammaire est un intervalle de nombres de mots admis pour la solution post-traitée. Par exemple, on pourrait définir comme règle de grammaire : la solution post-traitée doit contenir entre trois et six mots.

De préférence, quand une règle de grammaire est utilisée, la méthode de l'invention comprend en outre l'étape suivante :
vii.
a. si la réponse au test de l'étape vi. est positive, fournir ladite solution post-traitée,
b. sinon, fournir ledit résultat de reconnaissance vocale.

Selon une autre variante possible, la méthode de l'invention comprend l'étape suivante quand une règle de grammaire est utilisée :
vii.
a. si la réponse au test de l'étape vi. est positive (c'est-à-dire : la solution post-traitée satisfait la règle de grammaire), fournir ladite solution post-traitée,
b. si la réponse au test de l'étape vi. est négative (c'est-à-dire : la solution post-traitée ne satisfait pas la règle de grammaire), ne pas fournir de solution post-traitée, ou fournir un message vide, ou fournir un message mentionnant qu'aucune solution post-traitée satisfaisante n'a pu être déterminée.

Il est possible de concevoir différent tests de validation de l'étape iii.a. Par exemple, le test de validation de l'étape iii.a. peut comprendre une étape de considérer un élément valide si sa durée est supérieure ou égale à un seuil de durée inférieur.
A chaque élément du résultat correspond une durée ou intervalle temporel qui est en général fourni par le moteur de reconnaissance vocale. Avec ce mode de réalisation préféré, il est possible de s'affranchir plus efficacement des éléments qui sont de courte durée, comme par exemple un bruit parasite qui peut être issu d'une machine.

Selon un autre exemple, le test de validation de l'étape iii.a. comprend une étape de considérer un élément valide si sa durée est inférieure ou égale à un seuil de durée supérieur. Avec ce mode de réalisation préféré, il est possible de s'affranchir plus efficacement des éléments qui sont de longue durée, comme par exemple une hésitation d'un orateur qui dit par exemple 'euh' mais pour lequel le moteur de reconnaissance vocale fournit le mot 'deux' (par exemple parce qu'il utilise une règle de grammaire prédéfinie qui lui impose de ne fournir que des chiffres). En utilisant ce mode de réalisation préféré, on pourra plus facilement éliminer ce mot 'deux' invalide.

Selon un autre exemple, ledit test de validation de l'étape iii.a. comprend une étape de considérer un élément valide si son taux de confiance est supérieur ou égal à un taux de confiance minimal.
La fiabilité de la méthode est encore accrue dans ce cas-là.

Selon un autre exemple, ledit test de validation de l'étape iii.a. comprend une étape de considérer un élément valide si un intervalle temporel le séparant d'un autre élément directement adjacent vers ladite fin du résultat est supérieur ou égal à un intervalle de temps minimum.
Grâce à cette variante préférée, il est possible de rejeter plus efficacement des éléments qui ne sont pas générés par un être humain mais plutôt par une machine par exemple et qui sont temporellement très rapprochés.

De préférence, ledit test de validation de l'étape iii.a. comprend une étape de considérer un élément valide si un intervalle temporel le séparant d'un autre élément directement adjacent vers ladite fin du résultat est inférieur ou égal à un intervalle de temps maximum. Grâce à cette variante, il est possible de rejeter plus efficacement des éléments qui sont temporellement grandement séparés l'un de l'autre.

Selon une autre variante possible de la méthode de l'invention, le test de validation de l'étape iii.a. comprend une étape de considérer un élément valide si un intervalle temporel le séparant d'un autre élément directement adjacent vers ledit début du résultat est supérieur à un intervalle (temporel) minimum.

Selon une autre variante possible de la méthode de l'invention, le test de validation de l'étape iii.a. comprend une étape de considérer un élément valide si un intervalle temporel le séparant d'un autre élément directement adjacent vers ledit début du résultat est inférieur à un intervalle (temporel) maximum.

De préférence, ledit test de validation de l'étape iii.a. comprend une étape de considérer, pour un orateur donné, un élément dudit résultat valide, si une statistique associée à cet élément est conforme, dans un intervalle près, à une statistique préétablie pour un même élément et pour cet orateur donné.
La statistique (ou statistique de reconnaissance vocale) associée audit élément est généralement fournie par le moteur de reconnaissance vocale. Des exemples de statistique associée à un élément sont : la durée de l'élément, son taux de confiance. D'autres exemples sont possibles. Il est possible d'enregistrer de telles statistiques pour différents éléments et pour différents orateurs (ou opérateurs), par exemple lors d'une étape préliminaire d'enrôlement. Si l'on connaît ensuite l'identité de l'orateur ayant enregistré une déclaration à laquelle correspond un résultat fourni par un moteur de reconnaissance vocale, il est possible de comparer des statistiques associées aux différents éléments dudit résultat avec des statistiques préétablies pour ces éléments et pour cet orateur. Dans ce cas, la méthode de l'invention comprend donc de préférence une étape supplémentaire permettant de déterminer l'identité de l'orateur.
Grâce à ce mode de réalisation préféré, la fiabilité et l'efficacité est encore accrue car il est possible de tenir compte de spécificités vocales de l'orateur.

De préférence, tous les éléments déterminés valides à l'étape iii.a sont repris pour déterminer ladite solution post-traitée à l'étape v..

Les inventeurs proposent aussi une méthode d'optimisation pour fournir une solution optimisée à partir d'un premier et d'un deuxième résultats de reconnaissance vocale et comprenant les étapes suivantes :
A. appliquer une méthode de post-traitement selon l'une quelconque des revendications précédentes audit premier résultat;
B. appliquer une méthode de post-traitement selon l'une quelconque des revendications précédentes audit deuxième résultat ;
C. déterminer ladite solution optimisée à partir d'un ou plusieurs éléments appartenant à un ou plusieurs résultats desdits premier et deuxième résultats et qui ont été déterminés valides par le test de validation de l'étape iii.a.

Selon un deuxième aspect, l'invention se rapporte à un programme (de préférence, programme d'ordinateur) pour permettre de traiter un résultat de reconnaissance vocale, ledit résultat comprenant un début, une fin et une pluralité d'éléments répartis entre ledit début et ladite fin, ledit programme comprenant un code pour permettre à un dispositif (par exemple un moteur de reconnaissance vocale, un ordinateur apte à communiquer avec un moteur de reconnaissance vocale) d'effectuer les étapes suivantes :
i. lire ledit résultat de reconnaissance vocale,
ii. isoler un élément de ladite pluralité d'éléments qui n'a pas subi le test de validation de l'étape iii.a.,
iii. ensuite,
   a. si un élément a été isolé à l'étape ii., déterminer s'il est valide en utilisant un test de validation,
   b. sinon, passer directement à l'étape v.,
iv. répéter les étapes ii. et iii.;
v. si au moins un élément a été déterminé valide à l'étape iii.a, déterminer une solution post-traitée en reprenant au moins un élément déterminé valide à l'étape iii.a;
caractérisé en ce que chaque élément isolé à l'étape ii est choisi de ladite fin du résultat audit début du résultat de manière consécutive et en ce que l'étape iii.a. comprend en outre une instruction de passer directement à l'étape v. si l'élément subissant le test de validation de l'étape iii.a n'est pas déterminé comme valide.

Les avantages associés à la méthode selon le premier aspect de l'invention, s'appliquent au programme de l'invention, mutatis mutandis. Ainsi, en particulier, il est possible d'avoir une solution post-traitée plus fiable avec le programme de l'invention. Il est également possible d'avoir un programme plus efficace pour déterminer une solution post-traitée correcte. Les différents modes de réalisation présentés pour la méthode selon le premier aspect de l'invention, s'appliquent au programme de l'invention, mutatis mutandis.

Si aucun élément n'a été déterminé valide à l'étape iii.a, l'étape v comprend de préférence la sous-étape suivante : déterminer une solution post-traitée qui ne comprend pas d'élément dudit résultat. Dans cette variante préférée et quand aucun élément n'a été déterminé valide à l'étape iii.a, différents exemples de solution post-traitée sont alors : message vide c'est-à-dire ne comprenant aucun élément (aucun mot par exemple), message mentionnant que le post-traitement a été infructueux, résultat fourni par moteur de reconnaissance vocale.

Selon un troisième aspect, l'invention se rapporte à un support de stockage (ou support d'enregistrement) pouvant être connecté à un dispositif (par exemple, un moteur de reconnaissance vocale, un ordinateur pouvant communiquer avec un moteur de reconnaissance vocale) et comprenant des instructions, qui lues, permettent audit dispositif de traiter un résultat de reconnaissance vocale, ledit résultat comprenant un début, une fin et une pluralité d'éléments répartis entre ledit début et ladite fin, lesdites instructions permettant d'imposer audit dispositif d'effectuer les étapes suivantes :
i. lire ledit résultat ;
ii. isoler un élément de ladite pluralité d'éléments qui n'a pas subi le test de validation de l'étape iii.a.,
iii. ensuite,
   a. si un élément a été isolé à l'étape ii., déterminer s'il est valide en utilisant un test de validation,
   b. sinon, passer directement à l'étape v.,
iv. répéter les étapes ii. et iii.;
v. si au moins un élément a été déterminé valide à l'étape iii.a, déterminer une solution post-traitée en reprenant au moins un élément déterminé valide à l'étape iii.a;
caractérisé en ce que chaque élément isolé à l'étape ii. est choisi de ladite fin du résultat audit début du résultat de manière consécutive et en ce que l'étape iii.a. comprend en outre une instruction de passer directement à l'étape v. si l'élément subissant le test de validation de l'étape iii.a n'est pas déterminé comme valide.

Les avantages associés à la méthode selon le premier aspect de l'invention, s'appliquent au support de stockage de l'invention, mutatis mutandis. Ainsi, en particulier, il est possible d'avoir une solution post-traitée plus fiable. Il est également possible de déterminer plus efficacement une solution post-traitée correcte. Les différents modes de réalisation présentés pour la méthode selon le premier aspect de l'invention, s'appliquent au support de stockage de l'invention, mutatis mutandis.

Si aucun élément n'a été déterminé valide à l'étape iii.a, l'étape v comprend de préférence la sous-étape suivante : déterminer une solution post-traitée qui ne comprend pas d'élément dudit résultat. Dans cette variante préférée et quand aucun élément n'a été déterminé valide à l'étape iii.a, différents exemples de solution post-traitée sont alors : message vide c'est-à-dire ne comprenant aucun élément (aucun mot par exemple), message mentionnant que le post-traitement a été infructueux, résultat fourni par moteur de reconnaissance vocale.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- la Fig.1: montre schématiquement un orateur disant une message qui est traité par un moteur de reconnaissance vocale ;
- la Fig.2: montre schématiquement un exemple de résultat de reconnaissance vocale;
- la Fig.3: montre schématiquement différentes étapes et leur interaction d'une variante préférée de la méthode de l'invention;
- la Fig.4: montre schématiquement un exemple de système de post-traitement.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de modes de réalisation particuliers

La figure 1 montre un orateur 40 (ou utilisateur 40) disant un message 50 vers un micro 5. Ce message 50 est ensuite transféré vers un moteur de reconnaissance vocale 10 qui est connu d'un homme du métier. Différents modèles et différentes marques sont disponibles sur le marché. En général, le micro 5 fait partie du moteur de reconnaissance vocale 10. Ce dernier traite le message 50 avec des algorithmes de reconnaissance vocale, basés par exemple sur un modèle de Markov caché (MMC). Il en résultat un résultat 100 de reconnaissance vocale. Un exemple de résultat 100 est une hypothèse générée par le moteur de reconnaissance vocale 10. Un autre exemple de résultat 100 est une solution obtenue à partir des algorithmes de reconnaissance vocale et à partir d'opérations de post-traitement qui sont par exemple appliquée à une ou plusieurs hypothèses générées par le moteur de reconnaissance vocale 10. Des modules de post-traitement pour fournir une telle solution peuvent faire partie du moteur de reconnaissance vocale 10. Le résultat 100 est généralement sous la forme d'un texte qui peut être déchiffré par une machine, un ordinateur ou une unité de traitement par exemple. Le résultat 100 est caractérisé par un début 111 et une fin 112. Le début 111 est antérieur à ladite fin 112 le long d'une échelle de temps, t. Le résultat 100 comprend une pluralité d'éléments 113 temporellement répartis entre le début 111 et la fin 112. Un élément 113 représente une information comprise entre deux temps différents le long de l'échelle de temps, t. En général, les différents éléments 113 sont séparés par des portions du résultat 100 représentant un silence, un bruit de fond, ou un intervalle de temps pendant lequel aucun élément 113 (mot par exemple) n'est reconnu par le moteur de reconnaissance vocale 10.

La méthode de l'invention se rapporte au post-traitement d'un résultat 100 de reconnaissance vocale. En d'autres termes, l'entrée de la méthode de l'invention correspond à un résultat 100 obtenu à partir d'algorithmes de reconnaissance vocale appliqués à un message 50 dit par un orateur 40 (ou utilisateur 40). La figure 2 montre un résultat 100 de reconnaissance vocale 100. Entre son début 111 et sa fin 112, le résultat 100 comprend plusieurs éléments 113, sept dans le cas illustré à la figure 2. Sur cette figure, les éléments 113 sont représentés en fonction du temps, t (abscisse). L'ordonnée, C, représente un niveau ou taux de confiance. Cette notion est connue d'un homme du métier. Il s'agit d'une propriété ou statistique généralement associée à chaque élément 113 et qui peut être fournie par un moteur de reconnaissance vocale 10 en général. Un taux de confiance représente, en général, une probabilité qu'un élément du résultat de reconnaissance vocale, déterminé par un moteur de reconnaissance vocale 10 à partir d'un élément parlé, est le bon. Cette propriété est connue d'un homme du métier. Un exemple de moteur de reconnaissance vocale est le modèle VoCon® 3200 V3.14 de Nuance. Dans ce cas, le taux de confiance varie entre 0 et 10 000. Une valeur de 0 se rapporte à une valeur minimale d'un taux de confiance (très faible probabilité que l'élément du résultat de reconnaissance vocale soit le bon) et 10 0000 représente une valeur maximale d'un taux de confiance (très grande probabilité que l'élément du résultat de reconnaissance vocale soit le bon). En fonction de la hauteur d'un élément 113 sur la figure 2, son taux de confiance 160 est plus ou moins élevé.

La première étape de la méthode de l'invention, l'étape i., consiste à recevoir le résultat 100. Ensuite, en partant de la fin 112, la méthode va isoler un premier élément 113. La méthode de l'invention va donc d'abord isoler le dernier élément 113 du résultat le long de l'échelle de temps, t. Une fois cet élément 113 choisi, la méthode détermine s'il est valide en utilisant un test de validation. Différents exemples de tests de validation sont présentés ci-dessous. On passe ensuite au deuxième élément 113 en partant de la fin 112 et ainsi de suite. On arrête de parcourir les éléments 113 du résultat 100 le long de la flèche en haut de la figure 2 dès qu'on a détecté qu'un élément 113 n'était pas valide. On détermine ensuite une solution post-traitée 200 en reprenant des éléments 113 qui ont été déterminés valides, de préférence, en utilisant tous les éléments 113 qui ont été déterminés valides. Lors de la détermination de la solution post-traitée 200, il faut garder le bon ordre des différents éléments 113 sélectionnés le long d'une échelle temporelle, t. Ainsi, il faut tenir compte que le premier élément 113 traité par la méthode de l'invention représente le dernier élément 113 du message 100 et donc qu'il doit se retrouver en dernier dans la solution post-traitée 200 s'il a été déterminé comme valide. En général, un moteur de reconnaissance vocale 10 fournit, avec les différents éléments 113 du message 100, des informations temporelles associées, par exemple le début et la fin de chaque élément 113. Ces informations temporelles associées peuvent être utilisées pour classer dans le bon ordre les éléments déterminés valides à l'étape iii.a., c'est-à-dire dans un ordre chronologique croissant.

De préférence, la méthode de l'invention comprend une étape de vérifier que la solution post-traitée 200 satisfait une règle de grammaire. Un exemple de règle de grammaire est un nombre de mots. Si la solution post-traitée 200 ne satisfait pas une telle règle de grammaire, il peut être décidé de ne pas la fournir. Dans ce cas, il est parfois préféré de fournir le résultat 100 du moteur de reconnaissance vocale 10. Si la solution post-traitée 200 satisfait une telle règle de grammaire, on préférera alors la fournir.

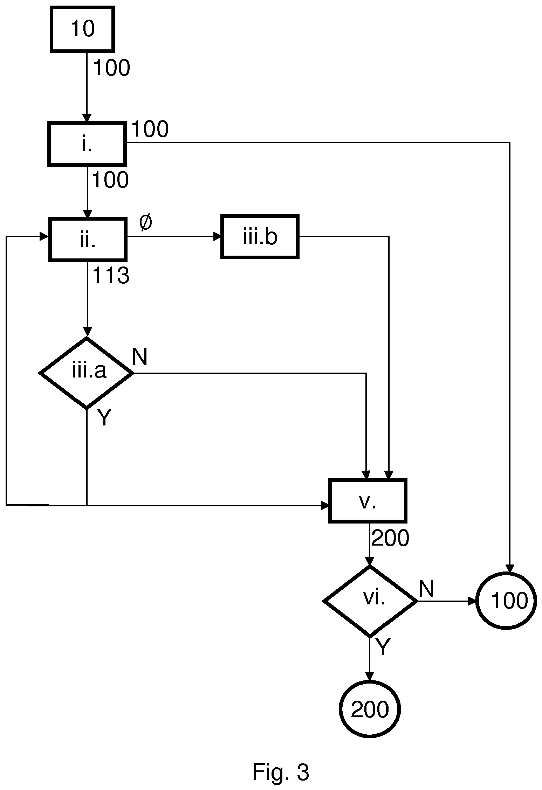

La figure 3 présente sous forme schématique une version préférée de la méthode de l'invention où :
- on s'arrête d'isoler (ou choisir) un élément 113 additionnel pour lui faire subir le test de validation quand on a détecté un élément 113 non valide, où
- on vérifie que la solution post-traitée 200 satisfait une règle de grammaire (étape vi.), où
- on fournit la solution post-traitée 200 si elle satisfait ladite règle de grammaire, et où
- on fournit le résultat 100 du moteur de reconnaissance vocale 10 si la solution post-traitée 200 ne satisfait pas ladite règle de grammaire.

L'étape iii.a consiste à déterminé si un élément 113 sélectionné à l'étape ii. est valide en utilisant un test de validation. Ce dernier peut prendre plusieurs formes.

Un élément 113 est caractérisé par un début et une fin. Il a donc une certaine durée 150. Selon une variante possible, le test de validation comprend une étape de considérer un élément 113 valide si sa durée 150 est supérieure ou égale à un seuil de durée inférieur. Le seuil de durée inférieur est par exemple compris entre 50 et 160 millisecondes. De préférence, le seuil de durée inférieur vaut 120 millisecondes. Le seuil de durée inférieur peut être adapté dynamiquement. Selon une autre variante possible, le test de validation comprend une étape de considérer un élément 113 valide si sa durée 150 est inférieure ou égale à un seuil de durée supérieur. Le seuil de durée supérieur est par exemple compris entre 400 et 800 millisecondes. De préférence, le seuil de durée supérieur vaut 600 millisecondes. Le seuil de durée supérieur peut être adapté dynamiquement. De préférence, le seuil de durée inférieur et/ou le seuil de durée supérieur est/sont déterminé(s) par une grammaire.

En général, un taux de confiance 160 est associé à chaque élément 113. Selon une autre variante possible, le test de validation comprend une étape de considérer un élément 113 valide si son taux de confiance 160 est supérieur ou égal à un taux de confiance minimal 161. De préférence, ce taux de confiance minimal 161 peut varier dynamiquement. Dans un tel cas, il est alors possible que le taux de confiance minimal 161 utilisé pour déterminer si un élément 113 est valide soit différent de celui utilisé pour déterminer si un autre élément 113 est valide ou pas. Les inventeurs ont trouvé qu'un taux de confiance minimal 161 compris entre 3500 et 5000 fournissait de bons résultats, une valeur encore préférée étant 4000 (valeurs pour le modèle VoCon® 3200 V3.14 de Nuance mais qui peuvent être transposées pour d'autres modèles de moteurs de reconnaissance vocale).

Selon une autre variante possible, le test de validation comprend une étape de considérer un élément 113 valide si un intervalle temporel 170 le séparant d'un autre élément 113 directement adjacent vers la fin 112 du résultat 100 est supérieur ou égal à un intervalle de temps minimum. Un tel intervalle de temps minimum est par exemple compris entre zéro et 50 millisecondes. Selon une autre variante possible, le test de validation comprend une étape de considérer un élément 113 valide si un intervalle temporel 170 le séparant d'un autre élément 113 directement adjacent vers la fin 112 du résultat 100 est inférieur ou égal à un intervalle de temps maximum. Un tel intervalle de temps maximum est par exemple compris entre 300 et 600 millisecondes et une valeur préférée est 400 ms. Pour ces deux exemples de test de validation, on considère donc l'intervalle de temps 170 qui sépare un élément 113 de son voisin direct vers la droite sur la figure 2. En d'autres termes, on regarde l'intervalle de temps qui sépare un élément 113 de son voisin de droite direct, c'est-à-dire son voisin postérieur le long de l'échelle de temps, t. Un intervalle de temps séparant deux éléments 113 est par exemple un intervalle de temps pendant lequel un moteur de reconnaissance vocale 10 ne reconnait pas d'élément 113, par exemple pas de mot.

Selon une autre variante possible, le test de validation est adapté à l'orateur 40 (ou utilisateur) qui a enregistré le message 50. Chaque personne prononce des éléments 113 ou mots d'une façon particulière. Par exemple, certaines personnes prononcent des mots lentement, tandis que d'autres les prononcent rapidement. De même, un taux de confiance 160 associé à un mot et fourni par un moteur de reconnaissance vocale 10 dépend, en général, de l'orateur 40 qui a prononcé ce mot. Si on connaît une ou plusieurs statistiques associées à différents éléments 113 pour un orateur 40 donné, on peut les utiliser lors du test de validation de l'étape iii.a. pour déterminer si un élément 113 est valide ou pas. Par exemple, on peut considérer qu'un élément 113, dit par orateur 40 donné, est valide si une ou plusieurs statistiques associée(s) à cet élément 113 est / sont conforme(s), dans un intervalle d'erreur près (10% par exemple), à la même, aux mêmes statistiques préétablies pour ce même élément 113 pour ce même orateur 40. Cette variante préférée du test de validation nécessite de connaître l'identité de l'orateur 40. Elle peut être fournie par exemple par le moteur de reconnaissance vocale 10. Selon une autre possibilité, la méthode de post-traitement de l'invention comprend une étape d'identification de l'orateur 40.

A la figure 2, des éléments 113 considérés comme valides sont délimités par des traits continus, tandis que des éléments non considérés comme valides sont délimités par des traits interrompus. Le quatrième élément 113 en partant de la fin 112 est par exemple considéré comme non valide parce que ça durée 150 est plus petite qu'un seuil de durée inférieur. Le cinquième élément 113 en partant de la fin 112 est par exemple considéré comme non valide parce que son taux de confiance 160 est inférieur à un taux de confiance minimal 161.

Les inventeurs proposent également une méthode pour générer une solution optimisée à partir d'un premier et d'un deuxième résultats 100 de reconnaissance vocale et comprenant les étapes suivantes :
A. appliquer une méthode de post-traitement selon le premier aspect de l'invention audit premier résultat 100;
B. appliquer une méthode de post-traitement selon le premier aspect de l'invention audit deuxième résultat 100;
C. déterminer ladite solution optimisée à partir d'un ou plusieurs éléments 113 appartenant à un ou plusieurs résultats 100 desdits premier et deuxième résultats 100 et qui ont été déterminés valides par le test de validation de l'étape iii.a

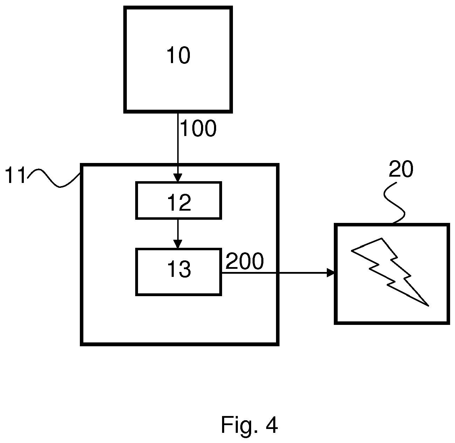

L'exemple suivant se rapporte à un système de post-traitement 11 ou dispositif de post-traitement d'un résultat 100 de reconnaissance vocale. La figure 4 illustre schématiquement un tel système de post-traitement 11 en combinaison avec un moteur de reconnaissance vocale 10 et un écran 20. Sur cette figure, le système de post-traitement 11 et le moteur de reconnaissance vocale 10 sont deux dispositifs séparés. Selon une autre version possible, le système de post-traitement 11 est intégré dans un moteur de reconnaissance vocale 10 de sorte qu'il ne soit pas possible de les différencier. Dans un tel cas, un moteur de reconnaissance vocale 10 classique est modifié ou adapté pour pouvoir réaliser les fonctions du système de post-traitement 11 décrites ci-dessous.

Des exemples de système de post-traitement 11 sont : un ordinateur, un moteur de reconnaissance vocale 10 adapté ou programmé pour pouvoir réaliser une méthode de post-traitement selon le premier aspect de l'invention, un module matériel (ou hardware) d'un moteur de reconnaissance vocale 10, un module matériel apte à communiquer avec un moteur de reconnaissance vocale 10. D'autres exemples sont néanmoins possibles. Le système de post-traitement 11 comprend des moyens d'acquisition 12 pour recevoir et lire un résultat 100 de reconnaissance vocale. Des exemples de moyens d'acquisition 12 sont : un port d'entrée du système de post-traitement 11, par exemple un port USB, un port Ethernet, un port sans fil (par exemple WIFI). D'autres exemples de moyens d'acquisition 12 sont néanmoins possibles. Le système de post-traitement 11 comprend en outre des moyens de traitement 13 pour effectuer les étapes suivantes de manière récursive: isoler, de la fin 112 vers le début 111 du résultat 100, un élément 113 du résultat 100 et qui n'a pas subi précédemment un test de validation des moyens de traitement 13, déterminer s'il est valide en utilisant un test de validation, déterminer une solution post-traitée 200 en reprenant au moins un élément 113 déterminé valide par lesdits moyens de traitement 13. De préférence, lesdits moyens de traitement 13 déterminent une solution post-traitée 200 en reprenant tous les éléments 113 déterminés valides par lesdits moyens de traitement 13. De préférence, le système de post-traitement 11 est apte à envoyer la solution post-traitée 200 vers un écran 20 pour l'afficher.

Des exemples de moyens de traitement 13 sont: une unité de contrôle, un processeur ou unité centrale de traitement, un contrôleur, une puce, une micro-puce, un circuit intégré, un processeur multi-cœurs. D'autres exemples connus d'un homme du métier sont néanmoins possibles. Selon une version possible, les moyens de traitement 13 comprennent différentes unités pour réaliser les différentes étapes mentionnées ci-dessus en lien avec ces moyens de traitement 13 (isoler un élément 113, déterminer s'il est valide, déterminer une solution post-traitée 200).

Selon un deuxième aspect, l'invention se rapporte à un programme, de préférence un programme d'ordinateur. De préférence, ce programme fait partie d'une interface vocale homme-machine.

Selon un troisième aspect, l'invention se rapporte à un support de stockage pouvant être connecté à un dispositif, par exemple un ordinateur pouvant communiquer avec un moteur de reconnaissance vocale 10. Selon une autre variante possible, ce dispositif est un moteur de reconnaissance vocale 10. Des exemples de support de stockage selon l'invention sont : une clé USB, un disque dur externe, un disque de type CD-ROM. D'autres exemples sont néanmoins possibles.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Méthode de post-traitement d'un résultat (100) de reconnaissance vocale, ledit résultat (100) comprenant un début (111), une fin (112) et une pluralité d'éléments (113) répartis entre ledit début (111) et ladite fin (112), ladite méthode de post-traitement comprenant les étapes suivantes :
i. recevoir ledit résultat (100) ;
ii. isoler un élément (113) de ladite pluralité d'éléments (113) qui n'a pas subi le test de validation de l'étape iii.a. ;
iii. ensuite,
a. si un élément (113) a été isolé à l'étape ii., déterminer s'il est valide en utilisant un test de validation,
b. sinon, passer directement à l'étape v. ;
iv. répéter les étapes ii. et iii.;
v. si au moins un élément (113) a été déterminé valide à l'étape iii.a, déterminer une solution post-traitée (200) en utilisant au moins un élément (113) déterminé valide à l'étape iii.a ;
**caractérisée en ce que** chaque élément (113) isolé à l'étape ii. est choisi de ladite fin (112) du résultat (100) audit début (111) du résultat (100) de manière consécutive et **en ce que** l'étape iii.a. comprend en outre une instruction de passer directement à l'étape v. si l'élément (113) subissant le test de validation de l'étape iii.a n'est pas déterminé comme valide.

2. Méthode selon la revendication 1 **caractérisée en ce que** lesdits éléments (113) sont des mots.

3. Méthode selon l'une quelconque des revendications précédentes **caractérisée en ce qu'**elle comprend en outre l'étape suivante :
vi. déterminer si ladite solution post-traitée (200) de l'étape v. satisfait une règle de grammaire.

4. Méthode selon la revendication précédente **caractérisée en ce qu'**elle comprend en outre l'étape suivante :
vii.
a. si la réponse au test de l'étape vi. est positive, fournir ladite solution post-traitée (200),
b. sinon, fournir ledit résultat (100) de reconnaissance vocale.

5. Méthode selon l'une quelconque des revendications précédentes **caractérisée en ce que** ledit test de validation de l'étape iii.a. comprend une étape de considérer un élément (113) valide si sa durée est supérieure ou égale à un seuil de durée inférieur.

6. Méthode selon l'une quelconque des revendications précédentes **caractérisée en ce que** ledit test de validation de l'étape iii.a. comprend une étape de considérer un élément (113) valide si sa durée est inférieure ou égale à un seuil de durée supérieur.

7. Méthode selon l'une quelconque des revendications précédentes **caractérisée en ce que** chaque élément (113) dudit résultat (100) est **caractérisé par** un taux de confiance (160) et **en ce que** ledit test de validation de l'étape iii.a. comprend une étape de considérer un élément (113) valide si son taux de confiance (160) est supérieur ou égal à un taux de confiance minimal (161).

8. Méthode selon l'une quelconque des revendications précédentes **caractérisée en ce que** ledit test de validation de l'étape iii.a. comprend une étape de considérer un élément (113) valide si un intervalle temporel (170) le séparant d'un autre élément (113) directement adjacent vers ladite fin (112) du résultat (100) est supérieur ou égal à un intervalle de temps minimum.

9. Méthode selon l'une quelconque des revendications précédentes **caractérisée en ce que** ledit test de validation de l'étape iii.a. comprend une étape de considérer, pour un orateur (40) donné, un élément (113) dudit résultat (100) valide, si une statistique associée à cet élément (113) est conforme, dans un intervalle près, à une statistique préétablie pour un même élément (113) et pour cet orateur (40) donné.

10. Méthode selon l'une quelconque des revendications précédentes **caractérisée en ce que** tous les éléments (113) déterminés valides à l'étape iii.a sont repris pour déterminer ladite solution post-traitée (200) à l'étape v..

11. Méthode pour déterminer une solution optimisée à partir d'un premier et d'un deuxième résultats (100) de reconnaissance vocale et comprenant les étapes suivantes :
A. appliquer une méthode de post-traitement selon l'une quelconque des revendications précédentes audit premier résultat (100);
B. appliquer une méthode de post-traitement selon l'une quelconque des revendications précédentes audit deuxième résultat (100) ;
C. déterminer ladite solution optimisée à partir d'un ou plusieurs éléments (113) appartenant à un ou plusieurs résultats (100) desdits premier et deuxième résultats (100) et qui ont été déterminés valides par le test de validation de l'étape iii.a.

12. Programme pour permettre de traiter un résultat (100) de reconnaissance vocale, ledit résultat (100) comprenant un début (111), une fin (112) et une pluralité d'éléments (113) répartis entre ledit début (111) et ladite fin (112), ledit programme comprenant un code pour permettre à un dispositif d'effectuer les étapes suivantes :
i. lire ledit résultat (100) de reconnaissance vocale,
ii. isoler un élément (113) de ladite pluralité d'éléments (113) qui n'a pas subi le test de validation de l'étape iii.a.,
iii. ensuite,
a. si un élément (113) a été isolé à l'étape ii., déterminer s'il est valide en utilisant un test de validation,
b. sinon, passer directement à l'étape v.,
iv. répéter les étapes ii. et iii.;
v. si au moins un élément (113) a été déterminé valide à l'étape iii.a, déterminer une solution post-traitée (200) en reprenant au moins un élément (113) déterminé valide à l'étape iii.a;
**caractérisé en ce que** chaque élément (113) isolé à l'étape ii est choisi de ladite fin (112) du résultat (100) audit début (111) du résultat (100) de manière consécutive et **en ce que** l'étape iii.a. comprend en outre une instruction de passer directement à l'étape v. si l'élément (113) subissant le test de validation de l'étape iii.a n'est pas déterminé comme valide.

13. Support de stockage pouvant être connecté à un dispositif et comprenant des instructions, qui lues, permettent audit dispositif de traiter un résultat (100) de reconnaissance vocale, ledit résultat (100) comprenant un début (111), une fin (112) et une pluralité d'éléments (113) répartis entre ledit début (111) et ladite fin (112), lesdites instructions permettant d'imposer audit dispositif d'effectuer les étapes suivantes :
i. lire ledit résultat (100) ;
ii. isoler un élément (113) de ladite pluralité d'éléments (113) qui n'a pas subi le test de validation de l'étape iii.a.,
iii. ensuite,
a. si un élément (113) a été isolé à l'étape ii., déterminer s'il est valide en utilisant un test de validation,
b. sinon, passer directement à l'étape v.,
iv. répéter les étapes ii. et iii.;
v. si au moins un élément (113) a été déterminé valide à l'étape iii.a, déterminer une solution post-traitée (200) en reprenant au moins un élément (113) déterminé valide à l'étape iii.a;
**caractérisé en ce que** chaque élément (113) isolé à l'étape ii. est choisi de ladite fin (112) du résultat (100) audit début (111) du résultat (100) de manière consécutive et **en ce que** l'étape iii.a. comprend en outre une instruction de passer directement à l'étape v. si l'élément (113) subissant le test de validation de l'étape iii.a n'est pas déterminé comme valide.

## Patentansprüche

1. Nachbearbeitungsverfahren eines Spracherkennungs-Ergebnisses (100), wobei das genannte Ergebnis (100) einen Anfang (111), ein Ende (112) und eine Vielzahl von Elementen (113) umfasst, die zwischen dem genannten Anfang (111) und dem genannten Ende (112) verteilt sind, wobei das genannte Nachbearbeitungsverfahren die folgenden Schritte umfasst:
i. Empfangen des genannten Ergebnisses (100);
ii. Isolieren eines Elements (113) der genannten Vielzahl von Elementen (113), das keinem Validierungstest des Schritts iii.a unterzogen wurde;
iii. anschließend
a. wenn ein Element (113) in Schritt ii. isoliert wurde, durch Verwenden eines Validierungstests ermitteln, ob es gültig ist,
b. andernfalls direkt zu Schritt v. übergehen;
iv. die Schritte ii. und iii. wiederholen;
v. wenn wenigstens ein Element (113) in Schritt iii.a. als gültig ermittelt wurde, eine nachbearbeitete Lösung (200) durch Verwenden wenigstens eines Elements ermitteln, die in Schritt iii.a. für gültig ermittelt wurde;
**dadurch gekennzeichnet, dass** jedes in Schritt ii. isolierte Element aus dem genannten Ende (112) des Ergebnisses (100) zu dem genannten Anfang (111) des Ergebnisses (100) konsekutiv ausgewählt wird und dass der Schritt iii.a. darüber hinaus eine Anweisung umfasst, um direkt zu Schritt v. überzugehen, wenn das Element (113), das dem Validierungstest des Schritts iii.a unterzogen wurde, nicht als gültig ermittelt wird.

2. Verfahren gemäß Anspruch 1, **dadurch gekennzeichnet, dass** die genannten Elemente (113) Wörter sind.

3. Verfahren gemäß irgendeinem der voranstehenden Ansprüche, **dadurch gekennzeichnet, dass** es darüber hinaus den folgenden Schritt umfasst:
vi. Ermitteln, ob die genannte Nachbearbeitungslösung (200) des Schritts v. einer Grammatikregel genügt.

4. Verfahren gemäß dem voranstehenden Anspruch, **dadurch gekennzeichnet, dass** es darüber hinaus den folgenden Schritt umfasst:
vii.
a. wenn die Antwort auf den Test des Schritts vi. positiv ist, Liefern der genannten nachbearbeiteten Lösung (200),
b. andernfalls Liefern des genannten Spracherkennungs-Ergebnisses (100).

5. Verfahren gemäß irgendeinem der voranstehenden Ansprüche, **dadurch gekennzeichnet, dass** der genannte Validierungstest des Schritts iii.a. einen Schritt zum Berücksichtigen eines gültigen Elements (113) umfasst, wenn seine Dauer länger als oder gleich wie ein unterer Schwellenwert einer Dauer ist.

6. Verfahren gemäß irgendeinem der voranstehenden Ansprüche, **dadurch gekennzeichnet, dass** der genannte Validierungstest des Schritts iii.a. einen Schritt zum Berücksichtigen eines gültigen Elements (113) umfasst, wenn seine Dauer kürzer als oder gleich einem höheren Schwellenwert einer Dauer ist.

7. Verfahren gemäß irgendeinem der voranstehenden Ansprüche, **dadurch gekennzeichnet, dass** jedes Element (113) des genannten Ergebnisses (100) durch eine Vertrauensrate (160) gekennzeichnet ist und dass der genannte Validierungstest des Schritts iii.a einen Schritt zum Berücksichtigen eines gültigen Elements (113) umfasst, wenn seine Vertrauensrate (160) größer als oder gleich wie eine minimale Vertrauensrate (161) ist.

8. Verfahren gemäß irgendeinem der voranstehenden Ansprüche, **dadurch gekennzeichnet, dass** der genannte Validierungstest des Schritts iii.a einen Schritt zum Berücksichtigen eines gültigen Elements (113) umfasst, wenn ein zeitliches Intervall (170), das es von einem direkt anliegenden Element (113) trennt, zu dem genannten Ende (112) des Ergebnisses (100) größer als oder gleich wie ein zeitliches Mindestintervall ist.

9. Verfahren gemäß irgendeinem der voranstehenden Ansprüche, **dadurch gekennzeichnet, dass** der genannte Validierungstest des Schritts iii.a. einen zu berücksichtigenden Schritt eines Elements des genannten gültigen Ergebnisses (100) für einen bestimmten Redner (40) umfasst, wenn eine diesem Element (113) zugeordnete Statistik in einem nahen Intervall einer vorab festgelegten Statistik für ein und dasselbe Element (113) und für diesen bestimmten Redner (40) konform ist.

10. Verfahren gemäß irgendeinem der voranstehenden Ansprüche, **dadurch gekennzeichnet, dass** alle in Schritt iii.a als gültig ermittelten Elemente (113) wieder aufgenommen werden, um die genannte, in Schritt v. nachbearbeitete Lösung (200) zu ermitteln.

11. Verfahren zum Ermitteln einer optimierten Lösung ausgehend von einem ersten und einem zweiten Spracherkennungs-Ergebnis (100) und umfassend die folgenden Schritte:
A. Anwenden eines Nachbearbeitungsverfahrens gemäß irgendeinem der voranstehenden Ansprüche auf das genannte erste Ergebnis (100);
B. Anwenden eines Nachbearbeitungsverfahrens gemäß irgendeinem der voranstehenden Ansprüche auf das genannte zweite Ergebnis (100);
C. Ermitteln der genannten optimierten Lösung ausgehend von einem oder mehreren Element (en) (113), das / die zu einem oder mehreren Ergebnis (sen) (100) des genannten ersten und zweiten Ergebnisses (100) gehören und die von dem Validierungstest des Schritts iii.a. für gültig ermittelt wurden.

12. Programm, um das Bearbeiten eines Spracherkennungs-Ergebnisses (100) zu ermöglichen, wobei das genannte Ergebnis (100) einen Anfang (111), ein Ende (112) und eine Vielzahl von Elementen (113) umfasst, die zwischen dem genannten Anfang (111) und dem genannten Ende (112) verteilt sind, wobei das genannte Programm einen Code umfasst, um einer Vorrichtung das Durchführen der folgenden Schritte zu ermöglichen:
i. Lesen des genannten Spracherkennungs-Ergebnisses (100),
ii. Isolieren eines Elements (113) der genannten Vielzahl von Elementen (113), das dem Validierungstest des Schritts iii.a. nicht unterzogen wurde,
iii. anschließend
a. wenn ein Element (113) in Schritt ii. isoliert wurde, unter Verwenden eines Validierungstests ermitteln, ob es gültig ist,
b. andernfalls direkt zu Schritt v. übergehen,
iv. die Schritte ii. und iii. wiederholen;
v. wenn wenigstens ein Element (113) in Schritt iii.a als gültig ermittelt wurde, ermitteln einer nachbearbeiteten Lösung (200) durch Wiederaufnehmen wenigstens eines in Schritt iii.a. als gültig ermittelten Elements (113),
**dadurch gekennzeichnet, dass** jedes in Schritt ii isolierte Element aus dem genannten Ende (112) des Ergebnisses (100) aus dem genannten Anfang (111) des Ergebnisses (100) konsekutiv ausgewählt ist und dass der Schritt iii.a darüber hinaus eine Anweisung zum direkten Übergehen zum Schritt v. umfasst, wenn das Element (113), das dem Validierungstest des Schritts iii.a unterzogen wird, nicht für gültig ermittelt ist.

13. Speicherträger, der an eine Vorrichtung angeschlossen sein kann und Anweisungen umfasst, die, wenn sie gelesen sind, der genannten Vorrichtung das Bearbeiten eines Sprachnachrichten-Ergebnisses (100) ermöglichen, wobei das genannte Ergebnis (100) einen Anfang (111), ein Ende (112) und eine Vielzahl von Elementen (113) umfasst, die zwischen dem genannten Anfang (111) und dem genannten Ende (112) verteilt sind, wobei die genannten Anweisungen es ermöglichen, der genannten Vorrichtung die folgenden Schritte aufzuzwingen:
i. Lesen des genannten Spracherkennungs-Ergebnisses (100),
ii. Isolieren eines Elements (13) der genannten Vielzahl von Elementen (113), das dem Validierungstest des Schritts iii.a. nicht unterzogen wurde,
iii. anschließend
a. wenn ein Element (113) in Schritt ii. isoliert wurde, unter Verwenden eines Validierungstests ermitteln, ob es gültig ist,
b. andernfalls direkt zu Schritt v. übergehen,
iv. die Schritte ii. und iii. wiederholen;
v. wenn wenigstens ein Element (113) in Schritt iii.a als gültig ermittelt wurde, ermitteln einer nachbearbeiteten Lösung (200) durch Wiederaufnehmen wenigstens eines in Schritt iii.a. als gültig ermittelten Elements (113),
**dadurch gekennzeichnet, dass** jedes in Schritt ii isolierte Element aus dem genannten Ende (112) des Ergebnisses (100) aus dem genannten Anfang (111) des Ergebnisses (100) konsekutiv ausgewählt ist und dass der Schritt iii.a darüber hinaus eine Anweisung zum direkten Übergehen zum Schritt v. umfasst, wenn das Element (113), das dem Validierungstest des Schritts iii.a unterzogen wird, nicht für gültig ermittelt ist.

## Claims

1. A method of post-processing a voice recognition result (100), said result (100) comprising a start (111), an end (112) and a plurality of elements (113) distributed between said start (111) and said end (112), said post-processing method comprising the following steps:
i. receiving said result (100);
ii. isolating an element (113) from said plurality of elements (113) that has not undergone the validation test of step iii.a.;
iii. and then,
a. if an element (113) has been isolated in step ii., determining whether it is valid by using a validation test,
b. otherwise, go directly to step v.;
iv. repeating steps ii. and iii.;
v. if at least one element (113) has been determined valid in step iii.a, determining a post-processed solution (200) by using at least one element (113) determined to be valid in step iii.a;
**characterised in that** each element (113) isolated in step ii. is selected from said end (112) of the result (100) to said start (111) of the result (100) consecutively and **in that** step iii.a. further comprises an instruction to go directly to step v. if the element (113) undergoing the validation test of step iii.a is not determined as valid.

2. Method according to claim 1 **characterised in that** said elements (113) are words.

3. Method according to any one of the preceding claims **characterised in that** it further comprises the following step:
vi. determining whether said post-processed solution (200) of step v. satisfied a grammar rule.

4. Method according to the preceding claim **characterised in that** it further comprises the following step:
vii.
a. if the answer to the test of step vi. is positive, providing said post-treated solution (200),
b. otherwise, providing said voice recognition result (100) .

5. Method according to any one of the preceding claims **characterised in that** said validation test of step iii.a. includes a step of considering an element (113) as valid if its duration is greater than or equal to a threshold of a shorter duration.

6. Method according to any one of the preceding claims **characterised in that** said validation test of step iii.a. comprises a step of considering an element (113) as valid if its duration is less than or equal to a threshold of a greater duration.

7. Method according to any one of the preceding claims, **characterised in that** each element (113) of said result (100) is **characterised by** a level of confidence (160) and **in that** said validation test of step iii.a. includes a step of considering an element (113) as valid if its level of confidence (160) is greater than or equal to a minimum level of confidence (161).

8. Method according to any one of the preceding claims **characterised in that** said validation test of step iii.a. includes a step of considering an element (113) as valid if a time interval (170) separating it from another directly adjacent element (113) towards said end (112) of the result (100) is greater than or equal to a minimum time interval.

9. Method according to any one of the preceding claims **characterised in that** said validation test of step iii.a. includes a step of considering, for a given speaker (40), an element (113) of said result (100) as valid, if a statistic associated with that element (113) is compliant, within a small range, with a given predetermined statistic for the same element (113) and for that speaker (40).

10. Method according to any one of the preceding claims, **characterised in that** all the elements (113) determined as valid in step iii.a are taken again to determine said post-processed solution (200) in step v.

11. Method for determining an optimised solution from a first and second voice recognition results (100) and comprising the following steps of:
A. applying a post-processing method according to any one of the preceding claims to said first result (100);
B. applying a post-processing method according to any one of the preceding claims to said second result (100);
C. determining said optimised solution from one or more elements (113) belonging to one or more results (100) of said first and second results (100) and which have been determined as valid by the validation test of step iii.a.

12. A program for processing a voice recognition result (100), said result (100) comprising a start (111), an end (112) and a plurality of elements (113) distributed between said start (111) and said end (112), said program comprising a code to enable a device to perform the following steps:
i. read said voice recognition result (100),
ii. isolate an element (113) from said plurality of elements (113) that has not passed the validation test of step iii.a.,
iii. then,
a. if an element (113) has been isolated in step ii., determine whether it is valid using a validation test,
b. otherwise, go directly to step v.,
iv. repeat steps ii. and iii.;
v. if at least one element (113) has been determined as valid in step iii.a, determine a post-processed solution (200) by taking at least one element (113) determined as valid in step iii.a;
**characterised in that** each element (113) isolated in step ii is selected from said end (112) of the result (100) to said start (111) of the result (100) consecutively and **in that** step iii.a. further comprises an instruction to go directly to step v. if the element (113) undergoing the validation test of step iii.a is not determined to be valid.

13. A storage medium that can be connected to a device and including instructions, which when read, enable said device to process a voice recognition result (100), said result (100) comprising a start (111), an end (112) and a plurality of elements (113) distributed between said start (111) and said end (112), said instructions enabling said device to compulsorily perform the following steps:
i. read said result (100);
ii. isolate an element (113) from said plurality of elements (113) that has not undergone the validation test of step iii.a.,
iii. then,
a. if an element (113) has been isolated in step ii., determine whether it is valid using a validation test,
b. otherwise, go directly to step v.
iv. repeat steps ii. and iii.;
v. if at least one element (113) has been determined as valid in step iii.a, determine a post-processed solution (200) by taking up least one element (113) determined as valid in step iii.a;
**characterised in that** each element (113) isolated in step ii. is selected from said end (112) of the result (100) to said start (111) of the result (100) consecutively and **in that** step iii.a. further comprises an instruction to go directly to step v. if the element (113) undergoing the validation test of step iii.a is not determined to be valid.
